# EUROPEAN PATENT SPECIFICATION

(11) **EP 1 077 549 B1**
(45) Date of publication and mention of the grant of the patent: **18.10.2006**
(21) Application number: 00116222.1
(22) Date of filing: 04.08.2000
(51) Int. Cl.: H04H 7/00

(54) **Method of and apparatus for mixing and reproducing audio information from two sources, and computer program for implementing the method**
Verfahren und Vorrichtung zum Mischen und für die Wiedergabe von Toninformationen aus zwei Quellen, sowie Computerprogramm für die Durchführung des Verfahrens
Méthode et dispositif pour mélanger des informations audiophoniques en provenance de deux sources et pour la reproduction de ces informations audiophoniques, ainsi que programme d'ordinateur pour la mise en oeuvre de cette méthode

(30) Priority: 04.08.1999 JP 22109399
(43) Date of publication of application: 21.02.2001
(73) Proprietor: Pioneer Corporation, Meguro-ku, Tokyo (JP)
(72) Inventor: Yamada, Youichi, Tokorozawa-shi, Saitama-ken (JP); Isobe, Hiroyuki, Tokorozawa-shi, Saitama-ken (JP); Suzuki, Takashi, Tokorozawa-shi, Saitama-ken (JP); Sakata, Koichiro, Tokorozawa-shi, Saitama-ken (JP); Kimura, Tomohiko, Tokorozawa-shi, Saitama-ken (JP); Funada, Takeaki, Tokorozawa-shi, Saitama-ken (JP); Kamei, Kazuo, Tokorozawa-shi, Saitama-ken (JP); Inoshita, Gen, Ohta-ku, Tokyo-to (JP); Chiba, Kensuke, Ohta-ku, Tokyo-to (JP); Amemiya, Naomi, Tokorozawa-shi, Saitama-ken (JP); Eguchi, Hiroyasu, Tokorozawa-shi, Saitama-ken (JP); Kaburagi, Keitaro, Tokorozawa-shi, Saitama-ken (JP); Yagi, Akiharu, Tokorozawa-shi, Saitama-ken (JP); Yada, Toru, Tokorozawa-shi, Saitama-ken (JP); Kataoka, Yoshinori, Tokorozawa-shi, Saitama-ken (JP)
(74) Representative: Reinhard - Skuhra - Weise & Partner

(56) References cited:
- EP-A- 0 791 914

## Description

### BACKGROUND OF THE INVENTION

### 1. Field of the Invention

The present invention relates to a method of and an apparatus for reproducing audio information, and an information record medium on which an audio information reproduction program to enable such a reproduction is recorded and which can be read by a computer, and more particularly relates to a method of and an apparatus for reproducing the audio information, which can reproduce two or more audio information continuously without intermittence while maintaining a constant rhythm. The present invention also relates to a computer program, which enables a computer to perform such an audio information reproduction.

### 2. Description of the Related Art

A club or salon referred to as a so-called "club" in Japan is very popular in which young persons mainly enjoy a dance in time to a music composition having a nimble rhythm. In such a club, in order for the persons to enjoy the dance, it is preferred that a plurality of music compositions are continuously played while a constant rhythm is maintained, even between different music compositions.

Here, the "rhythm" implies such a structure that a strength and a weakness of a tone are periodically repeated in a certain music composition (namely, a beat).

A plurality of music compositions are outputted to the inside of the club as an editor for editing the combination of music compositions (hereafter, this editor is referred to as a "disc jockey") selects and synthesizes the music compositions respectively outputted from a plurality of reproducing apparatuses, in the actual spot or scene.

At this time, as an actual method of continuously reproducing and outputting two music compositions, the disc jockey drives two reproducing apparatuses, for example, by using the following procedure.
(i) While a first reproducing apparatus is used to reproduce and output one music composition from an information record medium such as an optical disc, a second reproducing apparatus is used to reproduce another music composition. Then, another music composition is listened to by the disc jockey by using a headphone or the like without outputting it into the inside of the club.
(ii) Then, a reproducing speed of the second reproducing apparatus is set such that, while another music composition is listened to by the disc jockey, the time period required for one beat in another music composition coincides with that in the one music composition (which is currently being reproduced and outputted). Then, a head portion of another music composition is searched (i.e., a so-called "head search" is performed).
(iii) When the one music composition which is currently being reproduced and outputted approaches an end thereof, a reproduction level of the one music composition is gradually dropped (a so-called "fade-out" is performed). Along with this, another music composition is reproduced from the head portion thereof while it is matched with the beat timing of the one music composition. Then, the reproduction level for another music composition is gradually increased (a so-called "fade-in" is performed), so that another music composition is outputted to the inside of the club.
(iv) When the reproduction level of another music composition becomes equal to a proper reproduction level, the reproduction of the one music composition, which has been reproduced and outputted, is stopped. Then, the first reproducing apparatus is ready for further another music composition to be continuously reproduced after another music composition which is currently being reproduced and outputted.

After that, as the disc jockey repeats the procedure (i) to the procedure (iv), the plurality of different music compositions can be reproduced continuously without the intermittence while the rhythm is maintained constant.

In the above-mentioned series of operations, the "beat" implies each portion of the strengths and weaknesses of the tones repeated in the cycles of the rhythms of each music composition, and it is composed of a strong beat and a weak beat. The "strong beat" implies a strong portion of the bar or beat in a flow of the rhythm (typically, this portion corresponds to a first beat on a staff, and this is a portion represented by a motion of a conductor in which a baton is brought down from the above). Moreover, the "weak beat" implies a weak portion of the bar or beat in the flow of the rhythm.

At this time, for example, a double time uses a strong beat and a weak beat. A triple time uses a strong beat, a weak beat and a weak beat. A quadruple time uses a strong beat, a weak beat, a middle beat and a weak beat. Thus, in the continuous reproduction of the music compositions, it is desirable to start the reproduction of another music composition such that the timings of the strong beats of the one and another music compositions to be continuously reproduced are coincident with each other.

On the other hand, as a method of mechanically carrying out such a continuous reproduction, there is a connection reproduction method using a memory, for example, as disclosed in Japanese Utility Model Application Laid Open Publication No. Sho. 60-166892.

However, when the two music compositions are continuously connected and reproduced by the above-mentioned manual operations of the disc jockey, the condition of the connection between the music compositions is likely to be slightly changed or variegated. This is especially remarkable in association with the fatigue accumulation of the disc jockey, in a case of a continuous connection reproduction for a long time.

If the connection condition between the music compositions becomes monotonic in this manner, this results in a problem that it spoils the fun of the persons enjoying the dance.

On the other hand, according to the above mentioned method using the memory to mechanically carrying out the connection reproduction, only one kind of the condition of the connection between the music compositions is disclosed. Thus, this results in the problem of the monotonic connection similar to the above-mentioned case of manual operations.

Document EP 0 791 914 Al describes a karaoke apparatus providing customized medley play by connecting plural music pieces. In the karaoke apparatus, a music selector device selects a plurality of desired music pieces so as to compose a medley. A designator device designates a desired section of each music piece selected by the music selector devise. A sequencer device sequentially plays back the designated sections of the selected music pieces to perform the medley. A connecting device operates when the performed medley switches from a preceding section of one music piece to a succeeding section of another music piece to musically connect the preceding section to the succeeding section by different transition modes. A mode selector device selects an optimal one of the different transition modes according to musical properties of the one music piece and the other music piece so as to musically ensure smooth connection between the preceding section and the succeeding section.

### SUMMARY OF THE INVENTION

The present invention is proposed in view of the above mentioned problems. It is therefore an object of the present invention to provide a method of and an apparatus for reproducing audio information, which can connect and reproduce music compositions while a condition of the connection between the music compositions is variegated, as well as a computer program, which enables a computer to function as such an audio information reproducing apparatus.

The above object of the present invention can be achieved by an apparatus for use in a disc jockey equipment, for reproducing audio information, which reproduces one audio information and reproduces another audio information after said one audio information, provided with a memory for storing a plurality of connection information to respectively connect said another audio information to said one audio information by a plurality of connection conditions different from each other; a selecting device such as a CPU (Central Processing Unit) etc., for randomly selecting one of the plurality of connection information stored in the memory; and a reproducing device such as a DSP (Digital Signal Processor)etc., for connecting said another audio information to said one audio information by a connection condition corresponding to the selected connection information, and reproducing said another audio information after said one audio information.

According to the audio information reproducing apparatus of the present invention, since the connection condition between said one audio information and said another audio information is randomly selected, it is possible to reproduce them continuously with a variegated connection conditions plentiful in the change.

In one aspect of the audio information reproducing apparatus of the present invention, the selecting device randomly selects one of the plurality of connection information in accordance with a weighted probability, which is predetermined for each of the connection conditions.

According to this aspect, since one connection information is selected randomly in accordance with the weight probability for each of the connection conditions, it is possible to reproduce said one audio information and said another audio information continuously by selecting the connection condition based on the weight probability suitable for each connection condition.

In this aspect, the audio information reproducing apparatus may be further provided with a detecting device such as a BPM (Beat Per Minute) detector etc., for detecting a value of BPM of said one audio information and a value of BPM of said another audio information respectively, the selecting device selecting one of the plurality of connection information on the basis of a detection result of the detecting device.

By constituting in this manner, since the connection condition can be selected depending upon the detection result of the time period required for one beat, it is possible to connect and reproduce the audio information by selecting the connection condition more appropriately.

In this aspect having the detecting device, the memory may respectively store as the plurality of connection information: first connection information to connect said another audio information after said one audio information by the connection condition for making a reproduction end timing of said one audio information coincident with a reproduction start timing of said another audio information; second connection information to connect said another audio information after said one audio information by the connection condition for fading in said another audio information while fading out said one audio information; third connection information to connect said another audio information after said one audio information by the connection condition for using a reverberation sound of said one audio information; and fourth connection information to connect said another audio information after said one audio information by the connection condition for gradually reducing a musical interval of said one audio information at a reproduction end thereof, and the selecting device may select one of the first connection information to the fourth connection information.

By constituting in this manner, since one connection condition is selected from among the connection conditions corresponding to the first connection information to fourth connection information, it is possible to connect and reproduce the audio information in the connection condition more plentiful in the change.

In this aspect selecting one of the first connection information to the fourth connection information, the selecting device may select one of the plurality of connection information by setting a weighted probability in a selection of the first connection information equal to a weighted probability in a selection of the second connection information, setting a weighted probability in a selection of the third connection information equal to a weighted probability in a selection of the fourth connection information, and setting the weighted probability in the selection of each of the first and second connection information higher than the weighted probability in the selection of each of the third and fourth connection information, in case that the value of BPM of said one audio information and that of said another audio information are both detected by the detecting device.

By constituting in this manner, it is possible to connect and reproduce the audio information with more agreeability.

In this aspect selecting one of the first connection information to the fourth connection information, the selecting device may select one of the plurality of connection information by setting a weighted probability in a selection of the first connection information equal to a weighted probability in a selection of the second connection information, setting a weighted probability in a selection of the third connection information higher than a weighted probability in a selection of the fourth connection information, and setting the weighted probability in the selection of each of the first and second connection information lower than the weighted probability in the selection of the fourth connection information, in case that the value of BPM of said one audio information is detected and that of said another audio information is not detected by the detecting device.

By constituting in this manner, it is possible to connect and reproduce the audio information with more agreeability.

In this aspect selecting one of the first connection information to the fourth connection information, the selecting device may select one of the plurality of connection information by setting a weighted probability in a selection of the first connection information equal to a weighted probability in a selection of the second connection information, setting a weighted probability in a selection of the third connection information equal to a weighted probability in a selection of the fourth connection information, and setting the weighted probability in the selection of each of the first and second connection information lower than the weighted probability in the selection of each of the third and fourth connection information, in case that the value of BPM of said one audio information is not detected and that of said another audio information is detected by the detecting device.

By constituting in this manner, it is possible to connect and reproduce the audio information with more agreeability.

In this aspect selecting one of the first connection information to the fourth connection information, the selecting device may select one of the plurality of connection information by setting a weighted probability in a selection of the first connection information equal to a weighted probability in a selection of the second connection information, setting a weighted probability in a selection of the third connection information lower than a weighted probability in a selection of the fourth connection information, and setting the weighted probability in the selection of each of the first and second connection information lower than the weighted probability in the selection of the third connection information, in case that the value of BPM of said one audio information and that of said another audio information are not both detected by the detecting device.

By constituting in this manner, it is possible to connect and reproduce the audio information with more agreeability.

The above object of the present invention can be also achieved by a method for use in a disc jockey equipment of reproducing audio information, which reproduces one audio information and reproduces another audio information after said one audio information, provided with a selecting process of randomly selecting one of a plurality of connection information to respectively connect said another audio information to said one audio information by a plurality of connection conditions different from each other; and a reproducing process of connecting said another audio information to said one audio information by a connection condition corresponding to the selected connection information, and reproducing said another audio information after said one audio information.

According to the audio information reproducing method of the present invention, since the connection condition between said one audio information and said another audio information is randomly selected, it is possible to reproduce them continuously with a variegated connection conditions plentiful in the change.

In one aspect of the audio information reproducing method of the present invention, the selecting process randomly selects one of the plurality of connection information in accordance with a weighted probability, which is predetermined for each of the connection conditions.

According to this aspect, since one connection information is selected randomly in accordance with the weight probability for each of the connection conditions, it is possible to reproduce said one audio information and said another audio information continuously by selecting the connection condition based on the weight probability suitable for each connection condition.

In this aspect, the audio information reproducing method may be further provided with a detecting process of detecting a value of BPM of said one audio information and a value of BPM of said another audio information respectively, the selecting process selects one of the plurality of connection information on the basis of a detection result of the detecting process.

By constituting in this manner, since the connection condition can be selected depending upon the detection result of the time period required for one beat, it is possible to connect and reproduce the audio information by selecting the connection condition more appropriately.

The above object of the present invention can be also achieved by a computer program tangibly embodying a program of instructions executable by a computer to perform processes for use in a disc jockey equipment to reproduce one audio information and reproduce another audio information after said one audio information, the processes including a selecting process of randomly selecting one of a plurality of connection information to respectively connect said another audio information to said one audio information by a plurality of connection conditions different from each other; and a reproducing process of connecting said another audio information to said one audio information by a connection condition corresponding to the selected connection information, and reproducing said another audio information after said one audio information.

According to the computer program of the present invention as the computer executes the computer program, it is possible to realize the above described audio information reproducing apparatus of the present invention on the computer.

In one aspect of the computer program of the present invention, the selecting process randomly selects one of the plurality of connection information in accordance with a weighted probability, which is predetermined for each of the connection conditions.

In this aspect, the processes may further include a detecting process of detecting a value of BPM of said one audio information and a value of BPM of said another audio information, respectively, the selecting process selects one of the plurality of connection information on the basis of a detection result of the detecting process.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG.1 is a block diagram showing a schematic configuration of an audio information outputting apparatus as an embodiment of the present invention;
FIG.2 is a block diagram showing detailed configurations of a mixer and respective players in the embodiment;
FIG.3 is a block diagram showing a detailed configuration of each DSP in the embodiment;
FIG.4 is a flowchart showing a reproduction controlling process in the embodiment;
FIG.5A is a diagram showing a connection pattern between music compositions as well as respective beats thereof in the embodiment;
FIG.5B is a diagram showing various connection patterns between the music compositions in the embodiment; and
FIG.6 is a flowchart showing a detailed portion of a process of selecting the connection pattern in the embodiment.

### DETAILED DESCRIPTION OF THE PREFERRED EMBODIMENTS

Preferred embodiments of the present invention will be explained below with reference to the drawings. In the following embodiments, the present invention is applied to an audio information outputting apparatus, which is intended to play the music compositions in the above-mentioned club and which includes a mixer for superimposing the music compositions outputted by a plurality of audio players to thereby generate the music composition for playing.

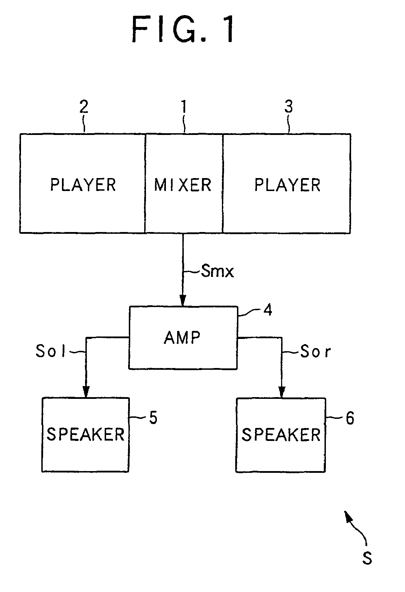

At first, the whole configuration and operation of the audio information outputting apparatus according to the embodiment is described with reference to FIG.1. FIG.1 is a block diagram showing the schematic configuration of the audio information outputting apparatus as the embodiment.

In FIG.1, an audio information outputting apparatus S is provided with a mixer 1, players 2 and 3, an amplifier 4 serving as one example of an outputting device and speakers 5 and 6.

At this time, the players 2 and 3 may be analog players for respectively reproducing so-called analog records, or may be digital players for digitally reproducing information on a CD (Compact Discs), a DVD or the like.

Also, the mixer 1 and the players 2 and 3 are actually integrally mounted in an audio rack or the like.

Next, the schematic operations of the respective constitutional elements are explained.

At first, the players 2 and 3 respectively reproduce the analog records or the CDs etc., and respectively generate music composition signals including the plurality of music compositions, and then output them to the mixer 1.

Then, the mixer 1 synthesizes the respectively generated music composition signals in accordance with the operation of the disc jockey, generates a mixer signal Smx, and outputs it to the amplifier 4.

After that, the amplifier 4 amplifiers the respective music compositions included in the mixer signal Smx, generates a left signal Sol including audio information (including both of sound or tone information of an instrument or the like, and voice information of a human song or the like) to be included in a left channel and a right signal Sor including audio information to be included in a right channel, respectively, and outputs them to the speaker 5 for the left channel and the speaker 6 for the right channel, respectively.

By those operations, the speakers 5 and 6 output the audio information, respectively included in the left signal Sol and the right signal Sor corresponding to the speakers 5 and 6, as the sound or tone to the inside of the club.

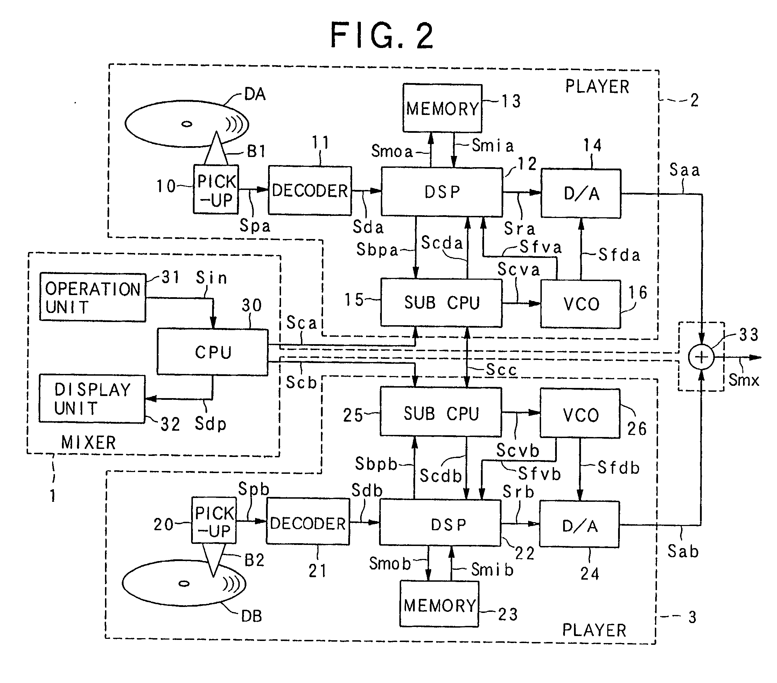

Next, the detailed configurations and operations of the mixer 1 and the players 2 and 3 according to the present embodiment are explained with reference to FIG.2. FIG.2 is a block diagram showing the detailed configurations of the mixer 1 and the players 2 and 3 in the embodiment.

At first, as shown in FIG.2, the player 2 for reproducing an optical disc DA, which is a CD or the like and on which a music composition to be reproduced is recorded, is provided with: an optical pickup 10; a decoder 11; a DSP (Digital Signal Processor) 12 serving as one example of a reproducing device; a memory 13; a D/A (Digital/Analog) converter 14; a sub CPU 15 serving as one example of a computer; and a VCO (Voltage Controlled Oscillator) 16.

On the other hand, the player 3 for reproducing an optical disc DB, which is a CD or the like and on which a music composition to be reproduced is recorded, has the configuration similar to that of the player 2. Actually, the player 3 is provided with: an optical pickup 20; a decoder 21; a DSP 22; a memory 23; a D/A converter 24; a sub CPU 25 serving as one example of a computer; and a VCO 26.

The mixer 1 is provided with: a CPU 30 serving as one example of a computer serving as examples of a memory and a selector; an operation unit 31; a display unit 32; and an adder 33.

Next, the operations of the respective constitutional elements will be described below. In the following description, the players 2 and 3 are operated under the substantially same conditions. So, the operations of the players 2 and 3 are commonly described.

In case that the player 2 or 3 reproduces a dance music composition from the optical disc DA or DB, the optical pickup 10 or 20 firstly drives a light source (not shown) including a semiconductor laser or the like to thereby emit a light beam B1 or B2. Then, the reception of the reflection light from the optical disc DA or DB enables the generation of a reproduction signal Spa or Spb that is an RF (Radio Frequency) signal corresponding to the music composition recorded on the optical disc DA or DB. The reproduction signal Spa or Spb is outputted to the decoder 11 or 21.

Accordingly, the decoder 11 or 21 applies a wave form re-shaping process, a decoding process, an amplifying process and the like onto the inputted reproduction signal Spa or Spb, to thereby digitize it and generate a digital decode signal Sda or Sdb. Then, the decoder 11 or 21 outputs the generated digital decode signal Sda or Sdb to the DSP 12 or 22.

Incidentally, the generation of the reproduction signal Spa or Spb in the optical pickup 10 or 20 and the generation of the digital decode signal Sda or Sdb in the decoder 11 or 21 are executed at a high speed, for example, such as a quadruple speed (i.e., four times speed) or the like. Thus, the generated digital decode signal Sda or Sdb is outputted to the DSP 12 or 22 at the quadruple speed or the like.

Then, the DSP 12 or 22 detects a later-described BPM (Beat Per Minute) value of the music composition to be reproduced, which is included in the inputted digital decode signal Sda or Sdb, to thereby generate a BPM signal Sbpa or Sbpb indicative of the BPM value. Then, the DSP 12 or 22 outputs the generated BPM signal Sbpa or Sbpb to the sub CPU 15 or 25, and also applies later-described various processes onto the digital decode signal Sda or Sdb in accordance with a later-described control signal Scda or Scdb from the sub CPU 15 or 25 to thereby generate a music composition signal Sra or Srb, and output it to the D/A converter 14 or 24.

At this time, the DSP 12 or 22 carries out these processes while transiently storing the data necessary for these processes as a memory signal Smoa or Smob into the memory 13 or 23, and further reading out the stored data as a memory signal Smia or Smib from the memory 13 or 23. Here, one series of processes from the detection of the reproduction signal Spa or Spb of the optical disc DA or DB to the storage of the memory signal Smoa or Smob into the memory 13 or 23 are performed at a high speed such as a quadruple speed (i.e., four times speed). On the other hand, the processes after reading out of the memory signal Smia or Smib from the memory 13 or 23 are performed at a low speed or a normal speed (i.e., one time speed).

Then, the D/A converter 14 or 24 converts the processed music composition signal Sra or Srb into an analog signal to thereby generate an analog music composition signal Saa or Sab and output it to the adder 33.

At this time, the reading out speed at which the music composition signal Sra or Srb is read out from the DSP 12 or 22 and the digital/analog conversion frequency in the D/A converter 14 or 24 (i.e., the digital/analog conversion speed) are controlled in accordance with speed control signals Sfva and Sfda from the VCO 16 or speed control signals Sfvb and Sfdb from the VCO 26, respectively. Actually, even if the input speed of the digital decode signal Sda or Sdb to the DSP 12 or 22 is as high as the quadruple speed, each of the reading out speed from the DSP 12 or 22 and the digital/analog conversion speed in the D/A converter 14 or 24 is controlled to be a normal speed (i.e., one time speed).

Then, the adder 33 adds the analog music composition signals Saa and Sab to thereby generate the mixer signal Smx as the output of the mixer 1, and output it to the amplifier 4 in FIG. 1.

On the other hand, in the above-mentioned processes of the respective constitutional elements, the sub CPU 15 or 25 generates and outputs the control signal Scda or Scdb to the DSP 12 or 22 so as to execute the later-described operation for the continuous reproductions of the music compositions, depending upon the control signal Sca or Scb from the CPU 30 and the BPM signal Sbpa or Sbpb from the DSP 12 or 22 while sending and receiving a control signal Scc between each other.

In parallel with those operations, the sub CPU 15 or 25 generates a control signal Scva or Scvb to control the operation of the VCO 16 or 26, and outputs it to the VCO 16 or 26, respectively. Thus, the VCO 16 generates and outputs the speed control signals Sfva and Sfda, respectively to the DSP 12 and the D/A converter 14, so as to control the output speed of the music composition signal Sra from the DSP 12 and the digital/analog conversion frequency of the D/A converter 14 as mentioned above. The VCO 26 generates and outputs the speed control signals Sfvb and Sfdb, respectively to the DSP 22 and the D/A converter 24, so as to control the output speed of the music composition signal Srb from the DSP 22 and the digital/analog conversion frequency of the D/A converter 24 as mentioned above.

Moreover, the CPU 30 generates and outputs the control signal Sca or Scb to the sub CPU 15 or 25, so as to make the sub CPU 15 or 25 execute the above-mentioned reproduction control.

At this time, the operation for specifying the operation of the mixer 1 and the players 2 and 3 through the CPU 30 is executed by the operation unit 31. An operation signal Sin corresponding to this operation of specifying is outputted from the operation unit 31 to the CPU 30. Then, the CPU 30 carries out the above-mentioned controls based on the operation signal Sin.

Moreover, the information with regard to the operations of the mixer 1 and the players 2 and 3 controlled by the CPU 30 (actually, the detected respective BPM values and the like) is outputted from the CPU 30 as a display signal Sdp to the display unit 32, and is displayed on the display unit 32 for the disc jockey and the like.

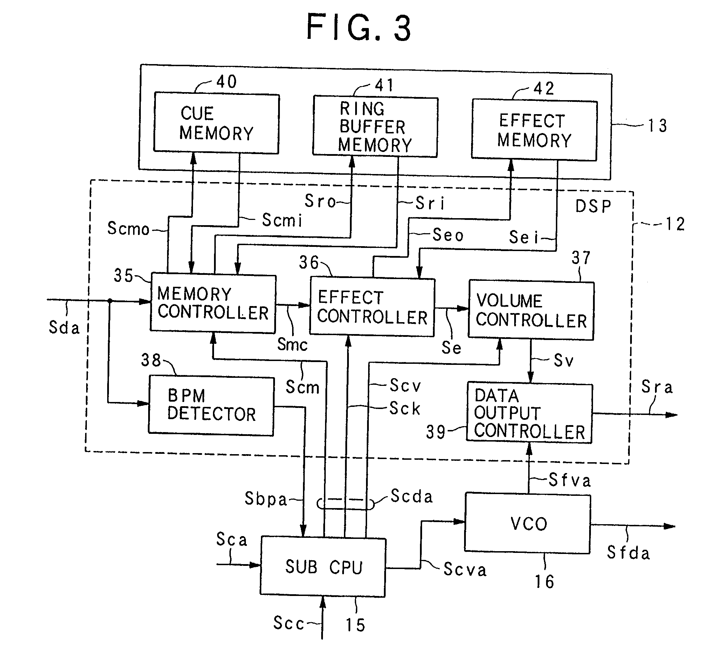

Next, the detailed configurations and operations of the DSP 12 or 22 and the memory 13 or 23 will be described with reference to FIG.3 together with their related constitutional elements. The DSP 12 and 22 have the configurations similar to each other and also carry out the operations similar to each other, while the memories 13 and 23 have the configurations similar to each other, and also carry out the operations similar to each other. Thus, the detailed configurations and operations of the DSP 12 and the memory 13 among them are respectively described in the following explanations.

As shown in FIG.3, the DSP 12 is provided with: a memory controller 35; an effect controller 36; a volume controller 37; a BPM detector 38 serving as one example of a detecting device; and a data output controller 39. The DSP 12 is actually formed as one LSI (Large Scale Integrated circuit). These controllers are respectively defined as respective functions in the LSI chip.

Also, the memory 13 is provided with: a cue memory 40; a ring buffer memory 41; and an effect memory 42. Here, each of the cue memory 40, the ring buffer memory 41 and the effect memory 42 is defined as a part of a memory area in the memory 13.

Next, the operations of the respective portions will be described.

At first, the BPM detector 38 detects the number of beats per minute of the music composition included in the inputted digital decode signal Sda (hereafter, the number of beats per minute is merely referred to as a "BPM value") to thereby generate the BPM signal Sbpa and output it to the sub CPU 15.

At this time, a process of detecting the BPM value in the BPM detector 38 is actually a process of continuing to detect an interval between the beats of the music composition for a certain time duration, and detecting the BPM value in accordance with the statistic of the beat intervals detected within the certain time duration. For example, such a process of automatically detecting the BPM value is performed by using a time counter as following. Namely, time-counting of the time counter is started at one time point when the level of a predetermined frequency component of the inputted audio signal exceeds a predetermined threshold level, and is stopped at another time point when the level of the frequency component exceed the threshold level again after a predetermined time duration has elapsed from the one time point. Then, the time-counted value is converted to the number of the beats for a predetermined unit time period to thereby obtain the BPM value. Such a process of automatically detecting the BPM value by using a time counter is known and is disclosed in a range between the paragraph numbers [0010] to [0027] and a range from FIG.1 to FIG.9 in Japanese Patent Application Laid Open Publication No. Hei. 8-201542, for example.

In other words, the process of detecting the BPM value is a process of detecting a beat timing, which is defined as a timing when a beat of each music composition (including both of the strong beat and the weak beat) is generated.

On the other hand, the cue memory 40 within the memory 13 is a memory for storing therein in advance the digital decode signal Sda corresponding to the head portion of a music composition to be next reproduced by the player 2, in order to compensate a transient interruption of the sound or tone due to the time required for optically reading out the data from the optical disc DA (occurring when a reproduction of a new music composition is started). Actually, for example, the digital decode signal Sda corresponding to two seconds at the head portion of the music composition to be next reproduced as the memory amount of the digital decode signal Sda is stored into the cue memory 40.

Next, the ring buffer memory 41 within the memory 13 is a memory for transiently storing therein the digital decode signal Sda corresponding to the music composition to be currently reproduced. Actually, the digital decode signal Sda is stored sequentially from the head thereof. Then, after all the memory areas within the ring buffer memory 41 are filled with the digital decode signals Sda, rewriting to replace the storage content by the digital decode signal Sda to be next stored from the head of the memory areas is repeated cyclically for the digital decode signal Sda corresponding to one music composition on the whole.

The effect memory 42 within the memory 13 is used to store therein the digital decode signal Sda, as the occasion demands, when the condition of the connection between the music compositions in the continuous reproduction of the music compositions is changed.

With respect to those memories, in accordance with a control signal Scm included in the control signal Scda outputted by the sub CPU 15, the memory controller 35 outputs and stored the inputted digital decode signal Sda into the cue memory 40 as a memory signal Scmo, as the occasion demands. Also, the memory controller 35 outputs and stores it into the ring buffer memory 41 as a memory signal Sro.

Moreover, the memory controller 35 reads out the digital decode signal Sda stored in the cue memory 40 or the ring buffer memory 41, as a memory signal Scmi or Sri, respectively as the occasion demands, and then outputs it as a reading out signal Smc to the effect controller 36.

Next, in accordance with a control signal Sck included in the control signal Scda outputted by the sub CPU 15, the effect controller 36 outputs and stores the inputted reading out signal Smc as a memory signal Seo into the effect memory 42, as the occasion demands. Also, while reading it out as a memory signal Sei from the effect memory 42, the effect controller 36 applies a process required to change the above-mentioned connection condition between the music compositions (hereafter, referred to as a "connection pattern") onto the reading out signal Smc, to thereby generate an effect signal Se and output it to the volume controller 37.

Incidentally, the effect signal Se is generated only when the connection between the music compositions is to be done. Except for the timing to do such a connection, the inputted reading out signal Smc (in other words, the digital decode signal Sda) is outputted to the volume controller 37 as it is.

Each of the memory signals Scmo, Sro, and Seo corresponds to the memory signal Smoa in FIG.2. Each of the memory signals Scmi, Sri and Sei corresponds to the memory signal Smia in FIG.2.

Next, the volume controller 37 adjusts a level of the effect signal Se or the reading out signal Smc by using a conventional method in accordance with a control signal Scv included in the control signal Scda outputted from the sub CPU 15, to thereby generate a level adjusted signal Sv and output it to the data output controller 39.

Then, the data output controller 39 controls an output rate (in other words, the BPM value (or tempo) of the music composition included in the music composition signal Sra) when the inputted level adjusted signal Sv is outputted as the music composition signal Sra as described later, in accordance with the speed control signal Sfva from the VCO 16, to thereby generate the music composition signal Sra at the controlled output rate and output it to the D/A converter 14 in FIG. 2. At this time, actually, the data output controller 39 controls the frequency of a clock signal for controlling the output rate of the music composition signal Sra, to a value indicated by the speed control signal Sfva, so as to control the output rate of the music composition signal Sra.

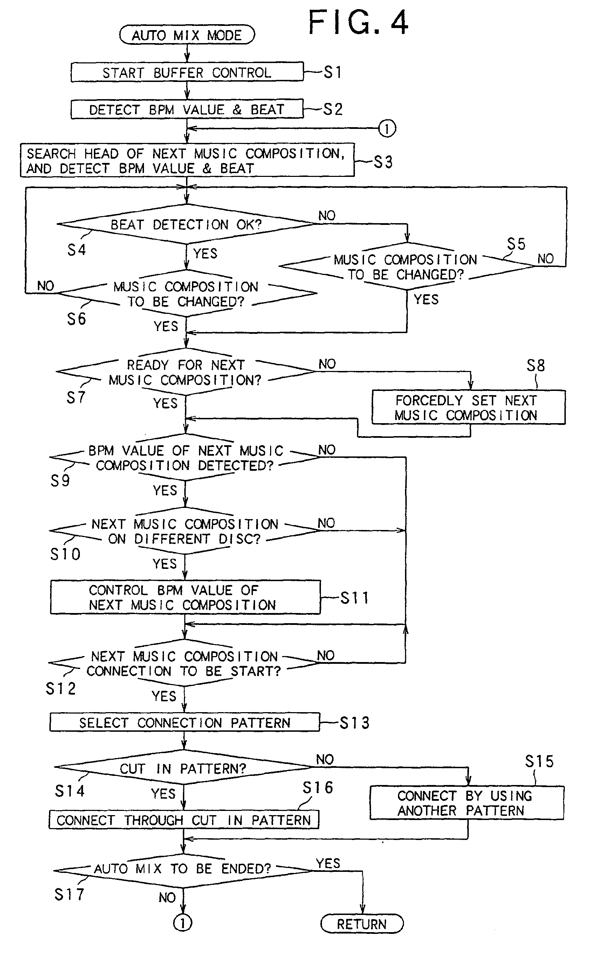

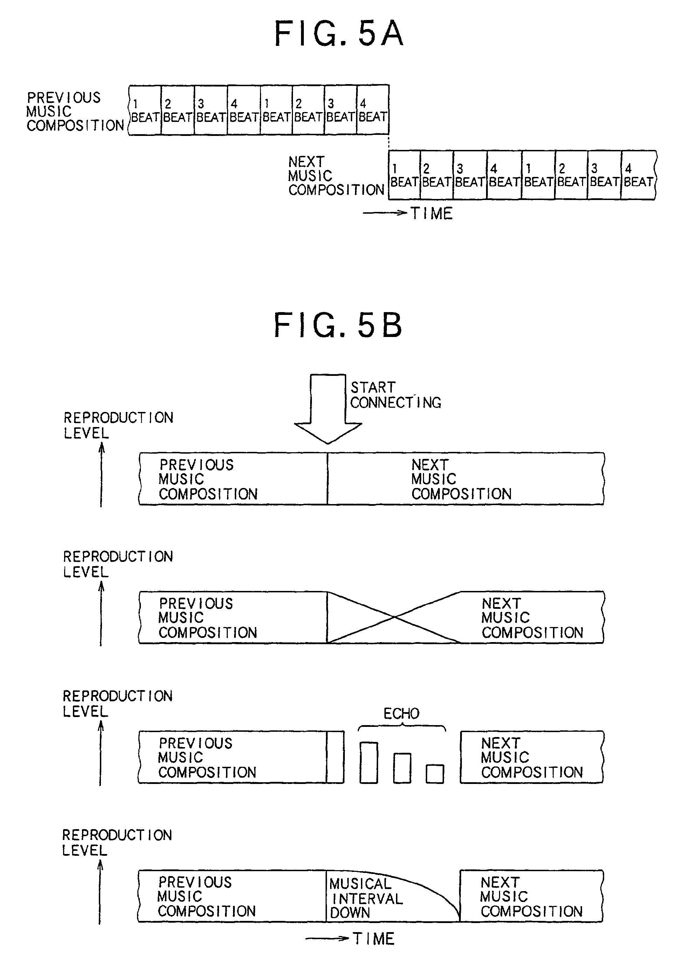

Next, the process of controlling the continuous reproduction of the music compositions according to the embodiment executed by the above-mentioned respective constitutional elements will be described with reference to FIGs.4, 5A and 5B. FIG.4 is a flowchart showing the reproduction control process, and FIGs.5A and 5B are diagrams showing the connection pattern between the music compositions.

The longitudinal length of each stage in FIG.5B denotes a reproduction level of each music composition.

Moreover, in the process of controlling the continuous reproduction shown in FIG.4, it is assumed that the specification of the music compositions to be continuously reproduced and the specification of the order of the music compositions are executed in advance by the operation unit 31 and that the contents of these specifications are recognized by the CPU 30 and the sub CPU 15 or 25.

Furthermore, it is assumed that the process of controlling the continuous reproduction shown in FIG.4 is performed by the CPU 30 and the sub CPU 15 or 25 in cooperation with each other.

As shown in FIG.4, in the process of controlling the continuous reproduction between the music compositions in the present embodiment, when a mode of continuously reproducing a plurality of music compositions automatically (hereinafter, this mode is referred to as an "auto mix mode") is specified through the operation unit 31, the memory controller 35 starts the processes of generating the digital decode signal Sda corresponding to the head portion of a music composition to be firstly reproduced, and storing it into the cue memory 40. Also the memory controller 35 starts the process of storing the digital decode signals Sda corresponding to the portions after the head portion into the ring buffer memory 41 in the reproduction order. Moreover, the memory controller 35 generates the music composition signal Sra or Srb, and continues to output the corresponding music composition (Step S1).

Next, the BPM value in the music composition currently being reproduced and outputted is detected, and the beat timing of the music composition is also detected (Step S2).

The processes of detecting the beat timing and the BPM value at the step S2 are done by using the memory 13 or 23 etc., within the player, which is currently reproducing the music composition.

Next, the head portion of the music composition, which is to be reproduced continuously after the music composition currently being reproduced and outputted, is searched (i.e., a so-called "head search" is performed) on the optical disc DA or DB (hereafter, this music composition being searched is referred to as a "next music composition"). The detections of the beat timing and the BPM value of the next music composition are respectively performed (Step S3).

The processes of carrying out the head search of the next music composition and detecting the BPM value at the step S3 are done by using the memory 13 or 23 etc., within the player, which is currently reproducing the music composition, if the next music composition is recorded on the optical disc DA or DB, on which the music composition currently being reproduced and outputted is recorded. On the contrary, if the next music composition is recorded on the optical disc DB or DA different from the optical disc DA or DB, on which the music composition currently being reproduced and outputted is recorded, the processes at the step S3 are done by using the memory 23 or 13 etc., within the player different from the player, which is currently reproducing the music composition.

Next, it is judged whether or not the beat timing of the music composition that is currently reproduced and outputted has been actually detected at the step S2 (Step S4). If the beat timing has never been detected (Step S4: NO), it is further judged whether or not the timing when the next music composition is to be outputted has just come (Step S5).

The judgment at the step S5 is done in accordance with whether or not a predetermined time duration has elapsed from the start of the output of the music composition currently being reproduced and outputted, in the normal process of controlling the continuous reproduction. On the other hand, for example, if a continuous reproduction for only initial one minute in each music composition is set in advance, the judgment at the step S5 is done in accordance with whether or not one minute has elapsed from the start of the output of the music composition currently being reproduced and outputted.

Then, if the timing of reproducing and outputting the next music composition has never come in the judgment at the step S5 (Step S5: NO), the operational flow returns back to the step S4, so that it is checked whether or not the beat timing has been detected while continuing to reproduce the current music composition. On the other hand, if the timing of reproducing and outputting the next music composition has just come (Step S5: YES), the operational flow proceeds to a step S7 as it is.

On the other hand, if the beat timing in the music composition currently being reproduced and outputted is normally detected in the judgment at the step S4 (Step S4: YES), it is judged whether or not the timing of reproducing and outputting the next music composition has come, in accordance with a count value of the detected beat timing, similarly to the step S5 (Step S6).

In the judgment at the step S6, it is judged whether or not a predetermined number of beats has been counted from the start of the output of the music composition currently being reproduced and outputted, in accordance with the count value of the detected beat timing, in the normal process of controlling the continuous reproduction. On the other hand, if the continuous reproduction for only initial one minute in each music composition is set in advance, it is judged whether or not the amount corresponding to, for example, 128 beats (which is a length corresponding to approximately one minute in a case that a length of one beat is 0.5 second for a dance music composition of a quadruple time) has been counted from the start of the output of the music composition currently being reproduced and outputted.

If the timing of reproducing and outputting the next music composition has never come yet in the judgment at the step S6 (Step S6: NO), the operational flow returns back to the step S4, and continues to reproduce the current music composition. On the other hand, if the timing of reproducing and outputting the next music composition has just come (Step S6: YES), it is next judged whether or not a preparation to start reproducing the next music composition is completed (actually, whether or not the digital decode signal Sda corresponding to the head portion of the next music composition is stored in the cue memory 40) (Step S7).

Then, if the preparation is completed (Step S7: YES), it is next judged whether or not the BPM value of the next music composition has been actually detected at the step S3 (Step S9). If it is not detected (Step S9: NO), the operational flow proceeds to a step S12 in order to start reproducing the next music composition without considering the connectivity of rhythm. On the other hand, if the BPM value of the next music composition has been actually detected (Step S9: YES), it is next judged whether or not the music composition, which is to be reproduced as the next music composition, is recorded on the optical disc DA or DB different from that on which the music composition currently reproduced and outputted is recorded (Step S10).

In the judgment at the step S10, if the next music composition is not recorded on the optical disc DA or DB different from that on which the music composition currently being reproduced and outputted is recorded i.e., recorded on the same optical disc DA or DB (Step S10: NO), the operational flow proceeds to the step S12 in order to start reproducing the next music composition. On the other hand, if the next music composition is recorded on the optical disc DA or DB different from that on which the music composition currently being reproduced and outputted is recorded (Step S10; YES), the BPM value of the next music composition recorded on the different optical disc DB or DA is set so as to coincide with the BPM value of the music composition currently being reproduced and outputted (Step S11). The process at the step S11 is executed by the data output controller 39 within the player which is to reproduce the next music composition. When the setting of the BPM value of the next music composition is ended, it is next judged whether or not the beat timing when the reproduction of the next music composition is to be started has come (Step S12).

In this step S12, if the beat timing of the music composition currently being reproduced and outputted has been detected, it is judged so as to start the reproduction output of the next music composition immediately after the elapse of the time corresponding to one beat from the start of the final beat (for example, a 128-th beat) of the music composition currently reproduced and outputted (e.g., start it at the timing of the 129-th beat) (refer to FIG.5A). In this case, the digital decode signal Sda is read out and outputted at a corresponding timing from the cue memory 40 which stores the head portion of the next music composition.

Also at the step S12, if the beat timing of the music composition currently being reproduced and outputted has never been detected, it is judged so as to start reproducing the next music composition by reading out the content of the cue memory 40 corresponding to the next music composition, immediately after the end of the current music composition.

In the judgment at the step S12, if the beat timing when the reproduction of the next music composition is to be started has never come yet (Step S12: NO), the operational flow waits for the beat timing. On the other hand, if the beat timing has just come (Step S12: YES), the connection pattern is selected in accordance with a predetermined procedure in case that the next music composition is to be actually connected to the music composition currently being reproduced and outputted (Step S13).

At this time, at the step S13, one connection pattern is selected from, for example, four kinds of connection patterns as shown in FIG.5B.

The respective connection patterns shown in FIG.5B are explained here. At first, a connection pattern shown on a top stage of FIG.5B is referred to as a so-called "cut in pattern", which is a connection pattern to start the reproduction output of the next music composition simultaneously with an end of a previous music composition (i.e., the music composition currently being reproduced and outputted). In this cut in pattern, the reproduction start of the next music composition is controlled so as to start the beat of the next music composition (refer to FIG.5A) in time to match the beat timing of the previous music composition as described later (refer to the step S12).

A connection pattern shown on a second stage from the top stage of FIG.5B is referred to as a so-called "cross fade pattern", in which the connection is done as follows. That is, a fade-out is performed on the previous music composition for a predetermined period, and it is ended. Then, a fade-in for the next music composition is started from a timing when the fade-out is started. The fade-in for the next music composition is completed at a timing when the fade-out for the previous music composition is ended. Thus, the reproduction level is kept at a natural level.

A connection pattern shown on a second stage from a bottom stage of FIG.5B is referred to as a so-called "echo pattern", in which the connection is done as follows. That is, when the reproduction output of the previous music composition is ended, a portion of a music composition corresponding to a final beat in the previous music composition is repeated in time to match the beat timing of the previous music composition, and the reproduction level is gradually dropped to then carry out the reproduction. Then, the reproduction of the next music composition is started when the reproduction level in the repetition decreases to a zero level. In this echo pattern, the rhythms at the time of the connection can be continuously connected by starting the reproduction of the next music composition so as to coincide with the beat timing of the previous music composition.

Incidentally, if the music compositions are connected through the echo pattern, the previous music composition is ended while the portion of the music composition corresponding to the final beat of the previous music composition is repeatedly reproduced and outputted by the operations of the effect controller 36 and the effect memory 42.

Finally, a connection pattern shown on the bottom stage of FIG.5B is referred to as a so-called "zip pattern", in which the connection pattern is done as follows. That is, when the reproduction output of the previous music composition is ended, a musical interval or distance of the previous music composition is gradually made down, and the reproduction level of the previous music composition is finally dropped to the zero level. Then, the reproduction of the next music composition is started in time to match the beat timing of the previous music composition from the timing of the zero level. In this zip pattern, when the previous music composition is ended, such a change on the acoustic feeling that a rotation of a so-called analog record is gradually stopped can be obtained.

In addition, in case that the music compositions are connected through the zip pattern, the musical interval or distance (a so-called "key" of a music composition) is gradually made down by the operations of the effect controller 36 and the effect memory 42, and the previous music composition is ended.

In FIG. 4 again, when the connection pattern is selected at the step S13, it is next judged whether or not the selected connection pattern is the cut in pattern (Step S14).

Then, if it is not the cut in pattern (Step S14: NO), the connection to the next music composition is done through another connection pattern (Step S15), and the operational flow proceeds to a step S17.

On the other hand, in the judgment at the step S14, if the selected connection pattern is the cut in pattern (Step S14: YES), the music composition is ended at the final beat timing of the music composition currently being reproduced and outputted. At the same time, the reproduction output of the next music composition is started from the beginning of the beat timing of the next music composition (Step S16). In this case, if the next music composition is recorded on the optical disc DA or DB same as that on which the previous music composition is recorded, the reproduction of the next music composition is started after the BPM value of the next music composition is set so as to coincide with the BPM value of the previous music composition at the timing of the reproduction output.

When the reproduction of the next music composition is started, it is judged whether or not an operation indicative of the end of the auto mix mode shown in FIG.4 is executed through the operation unit 31 (Step S17). If it is executed (Step S17: YES), the process of controlling the continuous reproduction is ended as it is. On the other hand, if it is not executed and the operation based on the auto mix mode is to be continued (Step S17: NO), the operational flow returns back to the step S3, and the above-mentioned operations are performed on the next music composition whose reproduction is started.

If the preparation for the next music composition is not completed at the step S7 (Step S7: NO), the next music composition is forcedly set (Step S8), and the operational flow proceeds to the step S9.

At this time, as the forcedly setting method at the step S8, for example, when the continuous reproduction is being done by using music compositions within one optical disc DA or DB and also the next music composition is being selected in accordance with a predetermined order, the digital decode signal Sda corresponding to the head portion of the next music composition based on the record order within the optical disc DA or DB is accumulated in the cue memory 40, and it remains on standby.

When the continuous reproduction is being done by alternately using two optical discs DA and DB and also the next music composition is being selected in accordance with the predetermined order or one of the optical discs DA and DB is being exchanged, the digital decode signal Sda corresponding to the head portion of the next music composition based on the record order within the optical disc DA or DB that is currently placed on any of the players 2 or 3 is accumulated in the cue memory 40, and it remains on standby.

Moreover, when the continuous reproduction is being done by using two optical discs DA and DB in a predetermined order (which is a random order and is not the record order) and also the next music composition is not set, the operational flow returns back to the first music composition in the predetermined order. Then, the digital decode signal Sda corresponding to the head portion of the first music composition is accumulated in the cue memory 40, and it remains on standby.

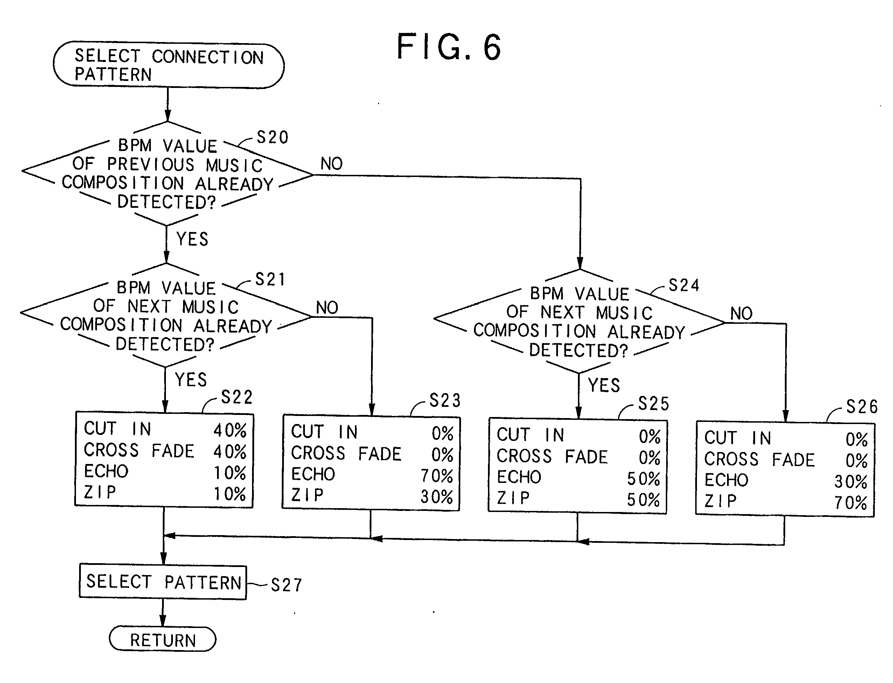

Next, the detailed portions of the process of selecting the connection pattern (Step S13) according to the present invention will be described with reference to FIG.6. FIG.6 is a flowchart showing the detailed portion of the process of selecting the connection pattern.

As shown in FIG.6, in the selecting process at the step S13, it is firstly judged whether or not the BPM value of the previous music composition has been already detected (Step S20). If the BPM value of the previous music composition has been already detected (Step S20: YES), it is next judged whether or not the BPM value of the next music composition has been already detected (Step S21).

If the BPM value of the next music composition has been already detected (Step S21: YES), a probability that the cut in pattern is selected in the CPU 30 and a probability that the cross fade pattern is selected are set to be 40 %, respectively. And, a probability that the echo pattern is selected and a probability that the zip pattern is selected are set to be 10 %, respectively (Step S22). Then, the connection pattern is randomly selected and determined in accordance with the set weighted probability (Step S27). Then, the operational flow proceeds to the judgment at the step S14 in FIG. 4.

On the other hand, in the judgment at the step S21, if the BPM value of the next music composition has never been detected (Step S21: NO), there may be a case that a rhythm matching in the connection between the previous music composition and the next music composition cannot be established if the cut in pattern and the cross fade pattern, which are based on the assumption that the beat timing and the BPM value are detected, are used. So, in this case, the probability that the cut in pattern is selected in the CPU 30 and the probability that the cross fade pattern is selected are set to be 0 %, respectively. And, the probability that the echo pattern is selected is set to be 70 %, and the probability that the zip pattern is selected is set to be 30 % (Step S23). Then, the connection pattern is randomly selected and determined in accordance with the set weighted probability (Step S27). Then, the operational flow proceeds to the judgment at the step S14 in FIG. 4.

In the judgment at the step S20, if the BPM value of the previous music composition has never been detected (Step S20: NO), it is next judged whether or not the BPM value of the next music composition has been already detected (Step S24).

Then, if the BPM value of the next music composition has been already detected (Step S24: YES), there may be the case that the rhythm matching in the connection between the previous music composition and the next music composition cannot be established if the cut in pattern and the cross fade pattern, which are based on the assumption that the beat timing and the BPM value are detected, are used, similarly to the case at the step S23. So, in this case, the probability that the cut in pattern is selected in the CPU 30 and the probability that the cross fade pattern is selected are set to be 0 %, respectively. And, the probability that the echo pattern is selected and the probability that the zip pattern is selected are set to be 50 %, respectively (Step S25). Then, the connection pattern is randomly selected and determined in accordance with the set weighted probability (Step S27). Then, the operational flow proceeds to the judgment at the step S14 in FIG. 4.

Moreover, in the judgment at the step S24, if the BPM value of the next music composition has never been detected (Step S24: NO), there may be the case that the rhythm matching in the connection between the previous music composition and the next music composition cannot be established if the cut in pattern and the cross fade pattern, which are based on the assumption that the beat timing and the BPM value are detected, are used, similarly to the cases at the steps S23 and S25. So, in this case, the probability that the cut in pattern is selected in the CPU 30 and the probability that the cross fade pattern is selected are set to be 0 %, respectively. And, the probability that the echo pattern is selected is set to be 30 %, and the probability that the zip pattern is selected is set to be 70 % (Step S26). Then, the connection pattern is randomly selected and determined in accordance with the set weighted probability (Step S27). Then, the operational flow proceeds to the judgment at the step S14.

As mentioned above, according to the process of controlling the continuous reproduction in the embodiment, the connection pattern between the music compositions are selected at random. Thus, the connection pattern, which is variegated and plentiful in the change, enables the previous music composition and the next music composition to be continuously connected and reproduced automatically.

One connection pattern is randomly selected in accordance with the predetermined weighted probability for each connection pattern. Thus, the respective music compositions can be continuously connected and reproduced by selecting the connection pattern from the probability suitable for each connection pattern.

Moreover, the connection pattern can be selected in accordance with the detection result of each BPM value. Thus, the respective music compositions can be connected and reproduced by correctly selecting the connection pattern.

Furthermore, one connection pattern is selected from the four connection patterns. Thus, the respective music compositions can be connected and reproduced under the condition plentiful in the change.

In case that the BPM value of the previous music composition and the BPM value of the next music composition are both detected, one connection pattern is selected by making the weighted probability in the selection of the cut in pattern equal to the weighted probability in the selection of the cross fade pattern (40 %), and making the weighted probability in the selection of the echo pattern equal to the weighted probability in the selection of the zip pattern (10 %), and further making the weighted probability in the selection of the cut in pattern and the cross fade pattern (40 %) higher than the weighted probability in the selection of the echo pattern and the zip pattern (10 %). Thus, the respective music compositions can be connected and reproduced with agreeability.

In case that the BPM value of the previous music composition is detected and the BPM value of the next music composition is not detected, one connection pattern is selected by making the weighted probability in the selection of the cut in pattern equal to the weighted probability in the selection of the cross fade pattern (0 %), and making the weighted probability in the selection of the echo pattern (70 %) higher than the weighted probability in the selection of the zip pattern (30 %), and further making the weighted probability in the selection of the cut in pattern and the cross fade pattern (0 %) lower than the weighted probability in the selection of the zip pattern (30 %). Thus, the respective audio information can be connected and reproduced with agreeability.

Further, in case that the BPM value of the previous music composition is not detected and that the BPM value of the next music composition is detected, one connection pattern is selected by making the weighted probability in the selection of the cut in pattern equal to the weighted probability in the selection of the cross fade pattern (0 %), and making the weighted probability in the selection of the echo pattern equal to the weighted probability in the selection of the zip pattern (50 %), and further making the weighted probability in the selection of the cut in pattern and the cross fade pattern (0 %) lower than the weighted probability in the selection of the echo pattern and the zip pattern (50 %). Thus, the respective music compositions can be connected and reproduced with agreeability.

Furthermore, in case that the BPM value of the previous music composition is not detected and the BPM value of the next music composition is not detected, one connection pattern is selected by making the weighted probability in the selection of the cut in pattern equal to the weighted probability in the selection of the cross fade pattern (0 %), and making the weighted probability in the selection of the echo pattern (30 %) lower than the weighted probability in the selection of the zip pattern (70 %), and further making the weighted probability in the selection of the cut in pattern and the cross fade pattern (0 %) lower than the weighted probability in the selection of the echo pattern (30 %). Thus, the respective audio information can be connected and reproduced with agreeability.

Moreover, since each music composition is a music composition for dance, while the respective music compositions can be continuously reproduced by using the variegated connection pattern plentiful in change, the dance can be continuously played over the two music compositions.

Incidentally, the case in which both of the strong beat and the weak beat in each music composition are detected is described in the process of detecting the BPM value in the embodiment. Otherwise, it may be configured so as to recognize each beat timing by detecting only the strong beat.

Also, in the embodiment, the case is described in which the strong beat of the next music composition follows the weak beat of the previous music composition when the connection is done in the continuous reproduction (refer to FIG.5A (in the case of the quadruple beat)). Otherwise, the connection of a weak beat or a middle strong beat of the next music composition to a weak beat of the previous music composition also enables the connection between the music compositions.

Moreover, in the embodiment, the case is described in which the present invention is applied to the audio information outputting apparatus S including the two players 2 and 3. Otherwise, the present invention can be applied to the case in which an audio information outputting apparatus including three or more players reproduces and outputs a music composition, after a music composition that is reproduced and outputted from one player, in parallel from the other two or more players.

Furthermore, it may be configured such that a program corresponding to the flow charts shown in FIGs.4 and 6 is stored in a flexible disc serving as one example of a program storage device etc., and then it is read out and executed by the CPU 30. Alternatively, such a computer program may be downloaded to the audio information outputting apparatus S through a network such as an internet.

As mentioned above, according to the present invention, since the connection condition between one audio information and another audio information is selected at random, they can be continuously reproduced while they are automatically connected under a connection condition plentiful in change.

## Claims

1. An apparatus (S) for use in a disc jockey equipment for reproducing audio information, which reproduces one audio information and reproduces another audio information after said one audio information, **characterized in that** said apparatus comprises:
a memory (13, 42) for storing a plurality of connection information to respectively connect said another audio information to said one audio information by a plurality of connection conditions different from each other;
a selecting device (1, 30) for randomly selecting one of the plurality of connection information stored in said memory; and
a reproducing device (2, 12) for connecting said another audio information to said one audio information by a connection condition corresponding to the selected connection information, and reproducing said another audio information after said one audio information.

2. An apparatus (S) according to claim 1, **characterized in that** said selecting device (1, 30) randomly selects one of the plurality of connection information in accordance with a weighted probability, which is predetermined for each of the connection conditions.

3. An apparatus (S) according to claim 2, **characterized in that** said apparatus further comprises a detecting device (38) for detecting a value of BPM of said one audio information and a value of BPM of said another audio information, respectively,
said selecting device (1, 30) selecting one of the plurality of connection information on the basis of a detection result of said detecting device.

4. An apparatus (S) according to claim 3, **characterized in that**
said memory (13, 42) respectively stores as the plurality of connection information:
first connection information to connect said another audio information after said one audio information by the connection condition for making a reproduction end timing of said one audio information coincident with a reproduction start timing of said another audio information;
second connection information to connect said another audio information after said one audio information by the connection condition for fading in said another audio information while fading out said one audio information;
third connection information to connect said another audio information after said one audio information by the connection condition for using a reverberation sound of said one audio information; and
fourth connection information to connect said another audio information after said one audio information by the connection condition for gradually reducing a musical interval of said one audio information at a reproduction end thereof, and
said selecting device (1, 30) selects one of the first connection information to the fourth connection information.

5. An apparatus (S) according to claim 4, **characterized in that**
said selecting device (1, 30) selects one of the plurality of connection information by setting a weighted probability in a selection of the first connection information equal to a weighted probability in a selection of the second connection information, setting a weighted probability in a selection of the third connection information equal to a weighted probability in a selection of the fourth connection information, and setting the weighted probability in the selection of each of the first and second connection information higher than the weighted probability in the selection of each of the third and fourth connection information, in case that the value of BPM of said one audio information and that of said another audio information are both detected by said detecting device (38).

6. An apparatus (S) according to claim 4, **characterized in that**
said selecting device (1, 30) selects one of the plurality of connection information by setting a weighted probability in a selection of the first connection information equal to a weighted probability in a selection of the second connection information, setting a weighted probability in a selection of the third connection information higher than a weighted probability in a selection of the fourth connection information, and setting the weighted probability in the selection of each of the first and second connection information lower than the weighted probability in the selection of the fourth connection information, in case that the value of BPM of said one audio information is detected and that of said another audio information is not detected by said detecting device (38).

7. An apparatus (S) according to claim 4, **characterized in that**
said selecting device (1, 30) selects one of the plurality of connection information by setting a weighted probability in a selection of the first connection information equal to a weighted probability in a selection of the second connection information, setting a weighted probability in a selection of the third connection information equal to a weighted probability in a selection of the fourth connection information, and setting the weighted probability in the selection of each of the first and second connection information lower than the weighted probability in the selection of each of the third and fourth connection information, in case that the value of BPM of said one audio information is not detected and that of said another audio information is detected by said detecting device (38).

8. An apparatus (S) according to claim 4, **characterized in that**
said selecting device (1, 30) selects one of the plurality of connection information by setting a weighted probability in a selection of the first connection information equal to a weighted probability in a selection of the second connection information, setting a weighted probability in a selection of the third connection information lower than a weighted probability in a selection of the fourth connection information, and setting the weighted probability in the selection of each of the first and second connection information lower than the weighted probability in the selection of the third connection information, in case that the value of BPM of said one audio information and that of said another audio information are not both detected by said detecting device (38).

9. An apparatus (S) according to claim 1, **characterized in that**
said one audio information, and said another audio information are generated by one audio player, and another audio player, respectively.

10. A method for use in a disc jockey equipment of reproducing audio information, which reproduces one audio information and reproduces another audio information after said one audio information, **characterized in that** said method comprises:
a selecting process of randomly selecting one of a plurality of connection information to respectively connect said another audio information to said one audio information by a plurality of connection conditions different from each other; and
a reproducing process of connecting said another audio information to said one audio information by a connection condition corresponding to the selected connection information, and reproducing said another audio information after said one audio information.

11. A method according to claim 10, **characterized in that** said selecting process randomly selects one of the plurality of connection information in accordance with a weighted probability, which is predetermined for each of the connection conditions.

12. A method according to claim 11, **characterized in that** said method further comprises a detecting process of detecting a value of BPM of said one audio information and a value of BPM of said another audio information, respectively,
said selecting process selects one of the plurality of connection information on the basis of a detection result of said detecting process.

13. A method according to claim 10, **characterized in that**
said one audio information, and said another audio information are generated by one audio player, and another audio player, respectively.

14. A computer program tangibly embodying a program of instructions executable by a computer to perform processes for use in a disc jockey equipment to reproduce one audio information, and reproduce another audio information after said one audio information, **characterized in that** said processes comprise:
a selecting process of randomly selecting one of a plurality of connection information to respectively connect said another audio information to said one audio information by a plurality of connection conditions different from each other; and
a reproducing process of connecting said another audio information to said one audio information by a connection conditions corresponding to the selected connection information, and reproducing said another audio information after said one audio information.

15. A computer program according to claim 14, **characterized in that** said selecting process randomly selects one of the plurality of connection information in accordance with a weighted probability, which is predetermined for each of the connection conditions.

16. A computer program according to claim 15, **characterized in that** said processes further comprise a detecting process of detecting a value of BPM of said one audio information and a value of BPM of said another audio information, respectively,
said selecting process selects one of the plurality of connection information on the basis of a detection result of said detecting process.

17. A computer program according to claim 14, **characterized in**
said one audio information, and said another audio information are generated by one audio player, and another audio player, respectively.

## Patentansprüche

1. Gerät (S) zur Verwendung in einer Disc-Jockey-Ausrüstung zum Wiedergeben einer Audio-Information, welche eine Audio-Information wiedergibt und eine weitere Audio-Information nach der einen Audio-Information wiedergibt, **dadurch gekennzeichnet, dass** das Gerät aufweist: einen Speicher (13, 42) zum Speichern einer Vielzahl von Verbindungsinformationen, um jeweils die weitere Audio-Information mit der einen Audio-Information durch eine Vielzahl voneinander unterschiedlichen Verbindungsbedingungen zu verbinden;
eine Auswahlvorrichtung (1, 30) zum zufälligen Auswählen einer der Vielzahl der in dem Speicher gespeicherten Verbindungsinformationen; und
eine Wiedergabevorrichtung (2, 12) zum Verbinden der weiteren Audio-Information mit der einen Audio-Information durch eine Verbindungsbedingung entsprechend der ausgewählten Verbindungsinformation und zum Wiedergeben der weiteren Audio-Information nach der einen Audio-Information.

2. Gerät nach Anspruch 1,
**dadurch gekennzeichnet,**
**dass** die Auswahlvorrichtung (1, 30) zufällig eine der Vielzahl der Verbindungsinformationen gemäß einer gewichteten Wahrscheinlichkeit, welche für jede der Verbindungsbedingungen vorbestimmt ist, auswählt.

3. Gerät nach Anspruch 2,
**dadurch gekennzeichnet,**
**dass** das Gerät weiter eine Detektiervorrichtung (38) zum Detektieren jeweils eines BPM-Wertes der einen Audio-Information und eines BPM-Wertes der weiteren Audio-Information aufweist,
wobei die Auswahlvorrichtung (1, 30) eine der Vielzahl der Verbindungsinformationen auf der Basis eines Detektionsergebnisses der Detektiervorrichtung auswählt.

4. Gerät nach Anspruch 3,
**dadurch gekennzeichnet,**
**dass** der Speicher (13, 42) jeweils als die Vielzahl der Verbindungsinformationen speichert:
eine erste Verbindungsinformation, um die weitere Audio-Information nach der einen Audio-Information durch die Verbindungsbedingung zum Herstellen einer mit einer Wiedergabestart-Zeitvorgabe der weiteren Audio-Information gleichzeitigen Wiedergabeende-Zeitvorgabe der einen Audio-Information zu verbinden;
eine zweite Verbindungsinformation; um die weitere Audio-Information nach der einen Audio-Information durch die Verbindungsbedingung zum Einblenden der weiteren Audio-Information während des Ausblendens der einen Audio-Information zu verbinden;
eine dritte Verbindungsinformation, um die weitere Audio-Information nach der einen Audio-Information durch die Verbindungsbedingung zum Verwenden eines Nachhallklangs der einen Audio-Information zu verbinden; und
eine vierte Verbindungsinformation, um die weitere Audio-Information nach der einen Audio-Information durch die Verbindungsbedingung zum graduellen Reduzieren eines Musikintervalls der einen Audio-Information bei einem Wiedergabeende dessen zu verbinden, und
wobei die Auswahlvorrichtung (1, 30) eine der ersten Verbindungsinformation bis vierten Verbindungsinformation auswählt.

5. Gerät nach Anspruch 4,
**dadurch gekennzeichnet,**
**dass** die Auswahlvorrichtung (1, 30) eine der Vielzahl der Verbindungsinformationen durch Setzen einer gewichteten Wahrscheinlichkeit in einer Auswahl der ersten Verbindungsinformationen, welche gleich einer gewichteten Wahrscheinlichkeit in einer Auswahl der zweiten Verbindungsinformationen ist, durch Setzen einer gewichteten Wahrscheinlichkeit in einer Auswahl der dritten Verbindungsinformationen, welche gleich einer gewichteten Wahrscheinlichkeit in einer Auswahl der vierten Verbindungsinformationen ist, und durch Setzen der gewichteten Wahrscheinlichkeit in der Auswahl jeder der ersten und zweiten Verbindungsinformationen, welche größer als die gewichtete Wahrscheinlichkeit in der Auswahl jeder der dritten und vierten Verbindungsinformationen ist, auswählt, falls der BPM-Wert der einen Audio-Information und der weiteren Audio-Information beide durch die Detektiervorrichtung (38) detektiert werden.

6. Gerät nach Anspruch 4,
**dadurch gekennzeichnet,**
**dass** die Auswahlvorrichtung (1, 30) eine der Vielzahl der Verbindungsinformationen durch Setzen einer gewichteten Wahrscheinlichkeit in einer Auswahl der ersten Verbindungsinformationen, welche gleich einer gewichteten Wahrscheinlichkeit in einer Auswahl der zweiten Verbindungsinformationen ist, durch Setzen einer gewichteten Wahrscheinlichkeit in einer Auswahl der dritten Verbindungsinformationen, welche größer als eine gewichtete Wahrscheinlichkeit in einer Auswahl der vierten Verbindungsinformationen ist, und durch Setzen der gewichteten Wahrscheinlichkeit in der Auswahl jeder der ersten und zweiten Verbindungsinformationen, die geringer als die gewichtete Wahrscheinlichkeit in der Auswahl der vierten Verbindungsinformationen ist, auswählt, falls der BPM-Wert der einen Audio-Information durch die Detektiervorrichtung (38) detektiert wird und der BPM-Wert der weiteren Audio-Information nicht detektiert wird.

7. Gerät nach Anspruch 4,
**dadurch gekennzeichnet,**
**dass** die Auswahlvorrichtung (1, 30) eine der Vielzahl der Verbindungsinformationen durch Setzen einer gewichteten Wahrscheinlichkeit in einer Auswahl der ersten Verbindungsinformationen, welche gleich einer gewichteten Wahrscheinlichkeit in einer Auswahl der zweiten Verbindungsinformationen ist, durch Setzen einer gewichteten Wahrscheinlichkeit in einer Auswahl der dritten Verbindungsinformationen, welche gleich einer gewichteten Wahrscheinlichkeit in einer Auswahl der vierten Verbindungsinformationen ist, und durch Setzen der gewichteten Wahrscheinlichkeit in der Auswahl jeder der ersten und zweiten Verbindungsinformationen, die geringer als die gewichtete Wahrscheinlichkeit in der Auswahl jeder der dritten und vierten Verbindungsinformationen ist, auswählt, falls der BPM-Wert der einen Audio-Information durch die Detektiervorrichtung (38) nicht detektiert wird und der BPM-Wert der weiteren Audio-Information detektiert wird.

8. Gerät nach Anspruch 4,
**dadurch gekennzeichnet,**
**dass** die Auswahlvorrichtung (1, 30) eine der Vielzahl der Verbindungsinformationen durch Setzen einer gewichteten Wahrscheinlichkeit in einer Auswahl der ersten Verbindungsinformationen, welche gleich einer gewichteten Wahrscheinlichkeit in einer Auswahl der zweiten Verbindungsinformationen ist, durch Setzen einer gewichteten Wahrscheinlichkeit in einer Auswahl der dritten Verbindungsinformationen, die geringer als eine gewichtete Wahrscheinlichkeit in einer Auswahl der vierten Verbindungsinformationen ist, und durch Setzen der gewichteten Wahrscheinlichkeit in der Auswahl jeder der ersten und zweiten Verbindungsinformationen, die geringer als die gewichtete Wahrscheinlichkeit in der Auswahl der dritten Verbindungsinformationen ist, auswählt, falls der BPM-Wert der einen Audio-Information und der der weiteren Audio-Information beide durch die Detektiervorrichtung (38) nicht detektiert werden.

9. Gerät nach Anspruch 1,
**dadurch gekennzeichnet,**
**dass** die eine Audio-Information und die weitere Audio-Information durch einen Audio-Spieler bzw. einen weiteren Audio-Spieler generiert werden.

10. Verfahren zur Verwendung in einer Disc-Jockey-Ausrüstung zum Wiedergeben einer Audio-Information, welche eine Audio-Information wiedergibt und eine weitere Audio-Information nach der einen Audio-Information wiedergibt, **dadurch gekennzeichnet, dass** das Verfahren aufweist:
einen Auswahlprozess zum zufälligen Auswählen einer einer Vielzahl von Verbindungsinformationen, um jeweils die weitere Audio-Information mit der einen Audio-Information durch eine Vielzahl voneinander unterschiedlichen Verbindungsbedingungen zu verbinden; und
einen Wiedergabeprozess zum Verbinden der weiteren Audio-Information mit der einen Audio-Information durch eine Verbindungsbedingung entsprechend der ausgewählten Verbindungsinformation und zum Wiedergeben der weiteren Audio-Information nach der einen Audio-Information.

11. Verfahren nach Anspruch 10,
**dadurch gekennzeichnet,**
**dass** der Auswahlprozess zufällig eine der Vielzahl der Verbindungsinformationen gemäß einer gewichteten Wahrscheinlichkeit, welche für jede der Verbindungsbedingungen vorbestimmt ist, auswählt.

12. Verfahren nach Anspruch 11,
**dadurch gekennzeichnet,**
**dass** das Verfahren weiter einen Detektierprozess zum Detektieren jeweils eines BPM-Wertes der einen Audio-Information und eines BPM-Wertes der weiteren Audio-Information aufweist,
wobei der Auswahlprozess eine der Vielzahl der Verbindungsinformationen auf der Basis eines Detektionsergebnisses der Detektiervorrichtung auswählt.

13. Verfahren nach Anspruch 10,
**dadurch gekennzeichnet,**
**dass** die eine Audio-Information und die weitere Audio-Information durch einen Audio-Spieler bzw. einen weiteren Audio-Spieler generiert werden.

14. Computer-Programm, welches ein durch einen Computer ausführbares Programm von Befehlen dinghaft verkörpert, um Prozesse zur Verwendung in einer Disc-Jockey-Ausrüstung zum Wiedergeben einer Audio-Information, welche eine Audio-Information wiedergibt und eine weitere Audio-Information nach der einen Audio-Information wiedergibt, durchzuführen, **dadurch gekennzeichnet, dass** die Prozesse aufweisen:
einen Auswahlprozess zum zufälligen Auswählen einer einer Vielzahl von Verbindungsinformationen, um jeweils die weitere Audio-Information mit der einen Audio-Information durch eine Vielzahl voneinander unterschiedlichen Verbindungsbedingungen zu verbinden; und
einen Wiedergabeprozess zum Verbinden der weiteren Audio-Information mit der einen Audio-Information durch eine Verbindungsbedingung entsprechend der ausgewählten Verbindungsinformation und zum Wiedergeben der weiteren Audio-Information nach der einen Audio-Information.

15. Computer-Programm nach Anspruch 14,
**dadurch gekennzeichnet,**
**dass** der Auswahlprozess zufällig eine der Vielzahl der Verbindungsinformationen gemäß einer gewichteten Wahrscheinlichkeit, welche für jede der Verbindungsbedingungen vorbestimmt ist, auswählt.

16. Computer-Programm nach Anspruch 15,
**dadurch gekennzeichnet,**
**dass** die Prozesse weiter einen Detektierprozess zum Detektieren jeweils eines BPM-Wertes der einen Audio-Information und eines BPM-Wertes der weiteren Audio-Information aufweisen,
wobei der Auswahlprozess eine der Vielzahl der Verbindungsinformationen auf der Basis eines Detektionsergebnisses der Detektiervorrichtung auswählt.

17. Computer-Programm nach Anspruch 14,
**dadurch gekennzeichnet,**
**dass** die eine Audio-Information und die weitere Audio-Information durch einen Audio-Spieler bzw. einen weiteren Audio-Spieler generiert werden.

## Revendications

1. Appareil (S) destiné à une utilisation dans un équipement de disc-jockey pour reproduire des informations audio, lequel reproduit des premières informations audio et reproduit d'autres informations audio après lesdites premières informations audio,
**caractérisé en ce que** ledit appareil comprend :
une mémoire (13, 42) destinée à stocker une pluralité d'informations de connexion pour connecter respectivement lesdites autres informations audio auxdites premières informations audio par une pluralité de conditions de connexion différentes les unes des autres ;
un dispositif de sélection (1, 30) destiné à sélectionner de manière aléatoire des informations parmi la pluralité d'informations de connexions stockées dans ladite mémoire ; et
un dispositif de reproduction (2, 12) destiné à connecter lesdites autres informations audio auxdites premières informations audio par une condition de connexion correspondant aux informations de connexion sélectionnées, et à reproduire lesdites autres informations audio après lesdites premières informations audio.

2. Appareil (S) selon la revendication 1,
**caractérisé en ce que**
ledit dispositif de sélection (1, 30) sélectionne de manière aléatoire des informations parmi la pluralité d'informations de connexion conformément à une probabilité pondérée, qui est prédéterminée pour chacune des conditions de connexion.

3. Appareil (S) selon la revendication 2,
**caractérisé en ce que**
ledit appareil comprend en outre un dispositif de détection (38) destiné à détecter une valeur de BPM desdites premières informations audio et une valeur de BPM desdites autres informations audio, respectivement ;
ledit dispositif de sélection (1, 30) sélectionnant des informations parmi la pluralité d'informations de connexion sur la base d'un résultat de détection dudit dispositif de détection.

4. Appareil (S) selon la revendication 3,
**caractérisé en ce que**
ladite mémoire (13, 42) stocke respectivement comme la pluralité d'informations de connexion :
des premières informations de connexion pour connecter lesdites autres informations audio après lesdites premières informations audio par la condition de connexion destinée à réaliser un minutage de fin de reproduction desdites premières informations audio qui coïncide avec un minutage de départ de reproduction desdites autres informations audio ;
des deuxièmes informations de connexion pour connecter lesdites autres informations audio après lesdites premières informations audio par la condition de connexion destinée à ouvrir en fondu lesdites autres informations audio tout en fermant en fondu lesdites premières informations audio ;
des troisièmes informations de connexion pour connecter lesdites autres informations audio après lesdites premières informations audio par la condition de connexion destinée à utiliser un son de réverbération desdites premières informations audio ; et
des quatrièmes informations de connexion pour connecter lesdites autres informations audio après lesdites premières informations audio par la condition de connexion destinée à réduire petit à petit un intervalle musical desdites premières informations audio à une fin de reproduction de celles-ci, et
ledit dispositif de sélection (1, 30) sélectionne des informations dans l'intervalle allant des premières informations de connexion aux quatrièmes informations de connexion.

5. Appareil (S) selon la revendication 4,
**caractérisé en ce que**
ledit dispositif de sélection (1, 30) sélectionne des informations parmi la pluralité d'informations de connexion en définissant une probabilité pondérée dans une sélection des premières informations de connexion qui soit égale à une probabilité pondérée dans une sélection des deuxièmes informations de connexion, en définissant une probabilité pondérée dans une sélection des troisièmes informations de connexion qui soit égale à une probabilité pondérée dans une sélection des quatrièmes informations de connexion, et en définissant la probabilité pondérée dans la sélection de chacune des premières et deuxièmes informations de connexion qui soit supérieure à la probabilité pondérée dans la sélection de chacune des troisièmes et quatrièmes informations de connexion, dans le cas où la valeur de BPM desdites premières informations audio et celle desdites autres informations audio sont toutes deux détectées par ledit dispositif de détection (38).

6. Appareil (S) selon la revendication 4,
**caractérisé en ce que**
ledit dispositif de sélection (1, 30) sélectionne des informations parmi la pluralité d'informations de connexion en définissant une probabilité pondérée dans une sélection des premières informations de connexion qui soit égale à une probabilité pondérée dans une sélection des deuxièmes informations de connexion, en définissant une probabilité pondérée dans une sélection des troisièmes informations de connexion qui soit supérieure à une probabilité pondérée dans une sélection des quatrièmes informations de connexion, et en définissant la probabilité pondérée dans la sélection de chacune des premières et deuxièmes informations de connexion qui soit inférieure à la probabilité pondérée dans la sélection des quatrièmes informations de connexion, dans le cas où la valeur de BPM desdites premières informations audio est détectée et celle desdites autres informations audio n'est pas détectée par ledit dispositif de détection (38).

7. Appareil (S) selon la revendication 4,
**caractérisé en ce que**
ledit dispositif de sélection (1, 30) sélectionne des informations parmi la pluralité d'informations de connexion en définissant une probabilité pondérée dans une sélection des premières informations de connexion qui soit égale à une probabilité pondérée dans une sélection des deuxièmes informations de connexion, en définissant une probabilité pondérée dans une sélection des troisièmes informations de connexion qui soit égale à une probabilité pondérée dans une sélection des quatrièmes informations de connexion, et en définissant la probabilité pondérée dans la sélection de chacune des premières et deuxièmes informations de connexion qui soit inférieure à la probabilité pondérée dans la sélection de chacune des troisièmes et quatrièmes informations de connexion, dans le cas où la valeur de BPM desdites premières informations audio n'est pas détectée et celle desdites autres informations audio est détectée par ledit dispositif de détection (38).

8. Appareil (S) selon la revendication 4,
**caractérisé en ce que**
ledit dispositif de sélection (1, 30) sélectionne des informations parmi la pluralité d'informations de connexion en définissant une probabilité pondérée dans une sélection des premières informations de connexion qui soit égale à une probabilité pondérée dans une sélection des deuxièmes informations de connexion, en définissant une probabilité pondérée dans une sélection des troisièmes informations de connexion qui soit inférieure à une probabilité pondérée dans une sélection des quatrièmes informations de connexion, et en définissant la probabilité pondérée dans la sélection de chacune des premières et deuxièmes informations de connexion qui soit inférieure à la probabilité pondérée dans la sélection des troisièmes informations de connexion, dans le cas où la valeur de BPM desdites premières informations audio et celle desdites autres informations audio ne sont pas toutes les deux détectées par ledit dispositif de détection (38).

9. Appareil (S) selon la revendication 1,
**caractérisé en ce que**
lesdites premières informations audio et lesdites autres informations audio sont générées par un premier lecteur audio et un autre lecteur audio, respectivement.

10. Procédé destiné à une utilisation dans un équipement de disc-jockey de reproduction d'informations audio, lequel reproduit des premières informations audio et reproduit d'autres informations audio après lesdites premières informations audio,
**caractérisé en ce que** ledit procédé comprend :
un processus de sélection destiné à sélectionner de manière aléatoire des informations parmi une pluralité d'informations de connexions pour connecter respectivement lesdites autres informations audio auxdites premières informations audio par une pluralité de conditions de connexion différentes les unes des autres ; et
un processus de reproduction destiné à connecter d'autres informations audio auxdites premières informations audio par une condition de connexion correspondant aux informations de connexion sélectionnées, et à reproduire lesdites autres informations audio après lesdites premières informations audio.

11. Procédé selon la revendication 10,
**caractérisé en ce que**
ledit processus de sélection sélectionne de manière aléatoire des informations parmi la pluralité d'informations de connexion conformément à une probabilité pondérée qui est prédéterminée pour chacune des conditions de connexion.

12. Procédé selon la revendication 11,
**caractérisé en ce que**
ledit procédé comprend en outre un processus de détection destiné à détecter une valeur de BPM desdites premières informations audio et une valeur de BPM desdites autres informations audio, respectivement ;
ledit processus de sélection sélectionne des informations parmi la pluralité d'informations de connexion sur la base d'un résultat de détection dudit processus de détection.

13. Procédé selon la revendication 10,
**caractérisé en ce que**
lesdites premières informations audio et lesdites autres informations audio sont générées par un premier lecteur audio et un autre lecteur audio, respectivement.

14. Programme informatique mettant en oeuvre de manière tangible un programme d'instructions pouvant être exécutées par un ordinateur pour effectuer des processus destinés à une utilisation dans un équipement de disc-jockey pour reproduire des premières informations audio et reproduire d'autres informations audio après lesdites premières informations audio,
**caractérisé en ce que** lesdits processus comprennent :
un processus de sélection destiné à sélectionner de manière aléatoire des informations parmi une pluralité d'informations de connexions pour connecter respectivement lesdites autres informations audio auxdites premières informations audio par une pluralité de conditions de connexion différentes les unes des autres ; et
un processus de reproduction destiné à connecter lesdites autres informations audio auxdites premières informations audio par une condition de connexion correspondant aux informations de connexion sélectionnées, et à reproduire lesdites autres informations audio après lesdites premières informations audio.

15. Programme informatique selon la revendication 14,
**caractérisé en ce que**
ledit processus de sélection sélectionne de manière aléatoire des informations parmi la pluralité informations de connexion conformément à une probabilité pondérée qui est prédéterminée pour chacune des conditions de connexion.

16. Programme informatique selon la revendication 15,
**caractérisé en ce que**
lesdits processus comprennent en outre un processus de détection destiné à détecter une valeur de BPM desdites premières informations audio et une valeur de BPM desdites autres informations audio, respectivement ;
ledit processus de sélection sélectionne des informations parmi la pluralité d'informations de connexion sur la base d'un résultat de détection dudit processus de détection.

17. Programme informatique selon la revendication 14,
**caractérisé en ce que**
lesdites premières informations audio et lesdites autres informations audio sont générées par un premier lecteur audio et un autre lecteur audio, respectivement.
